# EUROPEAN PATENT SPECIFICATION

(11) **EP 1 372 927 B1**
(45) Date of publication and mention of the grant of the patent: **01.06.2005**
(21) Application number: 02714640.6
(22) Date of filing: 29.03.2002
(51) Int. Cl.: B29C 45/14

(54) **PROCESS FOR MAKING A PLASTIC MOULDED ARTICLE WITH A DECORATED SURFACE**
VERFAHREN ZUR HERSTELLUNG EINES GEFORMTEN KUNSTSTOFFGEGENSTANDES MIT EINER DEKORATIVEN OBERFLÄCHE
PROCEDE DE FABRICATION D'UN ARTICLE MOULE EN PLASTIQUE COMPORTANT UNE SURFACE DECOREE

(30) Priority: 30.03.2001 NL 1017752
(43) Date of publication of application: 02.01.2004
(73) Proprietor: DSM IP Assets B.V., 6411 TE Heerlen (NL)
(72) Inventor: GOERTZ, Henricus, Johannes, Jacobus, NL-6166 HX Geleen (NL); GUNS, Johannes, Jacobus, NL-6003 CA Weert (NL)
(74) Representative: Krijgsman, Willem
(86) International application number: PCT/NL2002/000206
(87) International publication number: WO 2002/078927

(56) References cited:
- EP-A- 0 296 108
- EP-A- 0 485 307
- WO-A-95/12481
- PATENT ABSTRACTS OF JAPAN vol. 2000, no. 19, 5 June 2001 (2001-06-05) -& JP 2001 030290 A (NISSHA PRINTING CO LTD), 6 February 2001 (2001-02-06)

## Description

The invention relates to a process for making a plastic moulded article with a decorated surface, comprising the steps of
(a) introducing a decorated film in a mould; and
(b) filling the mould with a plastic composition by means of injection moulding.

The invention also relates to a plastic moulded article with a decorated surface, the decorated surface consisting of a decorated film, to a decorated moulded article with a decorated surface, the decorated surface consisting of a decorated film, the film comprising at least two layers, and to end-use products that contain such moulded articles.

Such a process is known from patent application EP 0619171 A1. That publication describes a process wherein a transparent film is printed first with an ink that is resistant to the temperatures that are reached in subsequent steps, whereupon the film is transferred to an opened mould of an injection moulding machine, the mould is closed and, subsequently, a plastic composition is injected in such a way that the ink layer is situated between the film and the plastic composition. The film is made of polycarbonate or polyethylene terephthalate in particular, and is resistant to the processing temperature of the plastic composition. Such a process for making decorated moulded articles is usually referred to as in-mould decoration (IMD). Advantages of this IMD technique over for example decorating moulded articles by printing on it at a later stage include greater flexibility in production and the possibility of decorating non-flat, 3-dimensional moulded parts. In addition, said process provides a decoration that is not directly exposed to the environment and is thus less susceptible to scratching, wear or degradation by for example solvents.

However, a disadvantage of the known process described by EP 0619171 A1 is that the decorated film must first be pre-shaped so as to obtain 3-dimensional (3-D) decorated moulded articles with the film adequately adhering to the plastic composition. Another disadvantage of the known process is that a polyurethane ink must be used, because otherwise the ink printing has an adverse effect on adhesion between film and the plastic composition, which may result in delamination.

The object of the invention is to provide a process that does not show the aforementioned disadvantages or shows the aforementioned disadvantages to a much lesser extent.

This object is achieved with the process according to the invention wherein a decorated film is used, which film comprises at least one layer consisting essentially of a thermoplastic elastomer containing polyether segments.

In the process according to the invention the film may be decorated beforehand by various techniques and various inks may be used for printing, and the film need not be pre-shaped to make 3-D moulded articles, while the film still exhibits adequate adhesion to the plastic composition.

An additional advantage of the process according to the invention is that the surface of the obtained moulded article has a pleasant feel, i.e. it has a so-called soft-touch character. Moreover, the surface usually is also fairly rough, i.e. it can exhibit non-slip properties. This is particularly advantageous for applications such as housings of end-use products such as mobile telephones, pocket calculators, electronic organizers or personal digital assistants, kitchen machines and the like, but also for vehicle components, particularly those in the passenger compartment, such as a dashboard or parts thereof. Another advantage is that the film remains intact also in those places where the moulded article without the film has openings, for example in those places where pushbuttons are to be mounted in a later phase, so that for example a (splash-) waterproof housing may be made for the aforementioned products.

A decorated film is herein understood to mean a film that serves to impart a different appearance to a moulded article. The film may have for example only a different colour than the moulded article, but may also impart a special colour effect such as a metallic appearance or a different gloss. The film may also be provided with one or more patterns, images or other indicia, which may be only figurative, only informative or both figurative and informative. The film may be transparent or translucent, but also (almost) opaque. The film may be non-porous or may be foamed with certain porosity, it may have a smooth surface, but also a surface texture may have been applied.

A layer consisting essentially of a thermoplastic elastomer containing polyether segments is herein understood to mean that the layer is made of a composition that contains as its major component at least one thermoplastic elastomer containing polyether segments, i.e. the composition generally contains more than 50 mass% of this thermoplastic elastomer, preferably more than 60, more preferably more than 70 and even more preferably more than 80 mass%, based on the total composition. The composition may also contain up to 50 mass% of other polymers, preferably not more than 40, more preferably not more than 30 and even more preferably not more than 20 mass%; such that the at least one thermoplastic elastomer forms a continuous phase of the composition. Preferably such other polymers are compatible with the thermoplastic elastomer to retain or improve mechanical and aesthetic properties. The composition may also contain any customary additives such as stabilisers, colorants, processing aids or flame-retarding compounds. Generally such additives are each present in amounts of 0,01-10 mass% based on the total composition, dependent on their function.

Suitable examples of a thermoplastic elastomer containing polyether segments are for example segmented copolymers with so-called hard and soft segments, with the soft segment being a polyether, preferably an aliphatic polyether. Such a thermoplastic elastomer containing polyether segments is hereafter also referred to as thermoplastic elastomer or as copolymer. Preferably the soft segments consist of a polyether derived from at least an alkylene oxide, for example a poly(alkylene oxide)glycol. Such copolymers exhibit good mechanical properties across a wide temperature range. As poly(alkylene oxide)glycol use may be made of for example poly(tetramethylene oxide)glycol or poly(tetrahydrofuran)glycol, poly(propylene oxide)glycol, especially poly(1,2-propylene oxide)glycol, poly(ethylene oxide)glycol, ethylene oxide-terminated poly(propylene oxide)glycol or combinations thereof. Such polyethers have an essentially amorphous character, a low glass transition temperature (T_{g}) and low stiffness. Preferably, the T_{g} is lower than 0°C, more preferably lower than -20°C, and most preferably lower than -30°C. The advantage hereof is high flexibility and good mechanical properties of the segmented copolymer even at low temperatures. These soft segments have in general a molecular mass of 400-6000 g/mol, preferably 500-3000 g/mol.

The hard segments in the copolymer have in general a softening temperature, i.e. a glass transition temperature or a melting temperature, higher than 100°C, more preferably higher than 150°C, and even more preferably higher than 170°C. Preferably the hard segments have a semi-crystalline character, resulting in improved chemical resistance of the copolymer. Suitable hard segments are segments based on a polyurethane, a polyamide or a polyester. The advantage of such a copolyether urethane, copolyether amide or copolyether ester thermoplastic elastomer is that they allow production of thin films with good properties, which films are transparent or at least translucent, can also be porous as a result of foaming during film making, and are well printable by various techniques.

The ratio between the soft and hard segments in the thermoplastic elastomer containing polyether segments may in general vary between wide limits, but is chosen particularly on the basis of the desired hardness of the copolymer. The hardness lies in general between 20 and 80 Shore D. A low hardness is advantageous in that it results in a more flexible film and better printability with various inks, a high hardness imparts in general higher temperature resistance and better mechanical properties. Preferably, the hardness is between 30 and 75, more preferably between 35 and 70 Shore D. The advantage hereof is a good balance between different properties, such as processability, temperature resistance, mechanical properties and printability by means of various techniques.

Preferably, the copolymer is a copolyether ester, because of its favourable processing characteristics. More specifically, the hard segment is a polyester made up of repeating units derived from at least one alkylene glycol and at least one aromatic dicarboxylic acid or an ester thereof. The alkylene group contains in general 2-6 C atoms, preferably 2-4 C atoms. For the alkylene glycol are preferred ethylene glycol, propylene glycol and in particular 1,4-butylene glycol. Terephthalic acid, 1,4-naphthalene dicarboxylic acid or 4,4'-diphenyldicarboxylic acid are particularly suitable as aromatic dicarboxylic acid. If desired, other dicarboxylic acids such as isophthalic acid may also be present; this normally results in a lower melting point. Preferably the hard segment is substantially based on polyethylene terephthalate, polypropylene terephthalate and in particular on polybutylene terephthalate. The advantage hereof is good crystallisation behaviour and a high melting point, so that the copolymers may readily be processed into film and exhibit good thermal and chemical stability.

Examples and preparation of such copolymers, particularly of copolyether esters, are described in for example Handbook of Thermoplastics, etc. O.Olabishi, Chapter 17, Marcel Dekker Inc. ,New York 1997, ISBN 0-8247-9797-3; in Thermoplastic Elastomers, 2nd Ed, Chapter 8, Carl Hanser Verlag (1996) ISBN 1-56990-205-4; in Encyclopedia of Polymer Science and Engineering, Vol. 12, Wiley & Sons, New York (1988), ISBN 0-471-80944, p.75-117; and the references cited therein.

Very good results have been obtained with a film made from at least a copolyether ester with hard segments derived from polybutylene terephthalate and soft segments derived from poly(tetramethylene oxide)glycol or ethylene oxide-terminated poly(propylene oxide)glycol. An advantage of these copolymers is their excellent heat resistance and processing behaviour. It has been found that in the process according to the invention a film made of these materials does not, or at least does not completely, soften or melt when the mould is filled with a molten polymer composition, even if it initially has a temperature above the melting point of the copolyether ester, so that the obtained moulded article has a layer of copolyether ester film over the whole (desired part of the) surface.

It is true that EP-A-0296108 discloses a process wherein a copolyether amide film is employed, but that film is not decorated beforehand. In this known IMD process, as the mould is filled, the copolymer film is decorated by the transfer of ink, under the influence of heat, from a decorated support film, which support film is passed into the mould together with the copolyether amide film, but does come to form part of the decorated moulded article.

A decorated film may be obtained by providing a film that comprises at least one layer consisting essentially of a thermoplastic elastomer containing polyether segments with one or more decorations utilizing various known techniques, including combinations of different techniques to obtain specific effects. Examples of suitable techniques include silkscreen printing, tampon offset printing and sublimation printing. The inks used in these techniques are preferably resistant to the temperatures that may occur during the later steps of the process according to the invention. Preferably, sublimation printing is used to apply decorations, because in that case very clear and sharp images are obtained on a film that comprises at least one layer consisting essentially of a thermoplastic elastomer containing polyether segments. Furthermore, in the process according to the invention such decorated films are found to exhibit excellent adhesion to the moulded article, while the decorations are not affected by the injection-moulding step.

The design and application of decorations on the film (2-dimensional) may already take into account the deformation of the film that occurs while the moulded article (3-dimensional) is made in step (b).

Preferably, the film is translucent or transparent so that the film can be positioned in the mould in such a way that the side to which the decoration has been applied is contacted with the plastic composition. The advantage hereof is that the decoration is well visible on the article thus obtained with the process according to the invention, but not directly exposed to environmental influences. In such a case, the decorations are preferably applied on the film in mirror image.

In a preferred embodiment of the process according to the invention, the decorated film consists of a single layer that comprises a copolymer. The advantage hereof is technical simplicity.

In another embodiment of the process according to the invention the film comprises at least two layers, of which at least one outer layer consists essentially of a copolymer and which layer has been provided with decorations. Such a multi-layer film may be made by means of a co-extrusion process or by laminating several films. The advantage hereof is that, by using different materials for different layers, a combination of desirable film properties may be obtained. One may choose for example a copolymer that is well printable and provides excellent adhesion to the plastic composition in combination with another material that exhibits for example good surface properties, for example wear properties. An example of such a multi-layer film is a film that has a layer consisting essentially of a copolyether ester copolymer and another layer of polycarbonate. Advantages of this combination are excellent adhesion between the layers, and high gloss and wear resistance of the polycarbonate layer.

In a particular embodiment of the process according to the invention at least two layers that both consist essentially of a copolymer, but of different hardness are combined. This has the advantage that the one component is chosen for good printability and the other component for another desired property. In this way, it is possible to provide the moulded article with for example a decorated surface with soft-touch and/or non-slip properties. Soft-touch properties may in general be obtained by making a surface layer from a material with low hardness, for example a copolymer with hardness lower than 60, preferably lower than 50, and more preferably lower than 40 Shore D, and applying a particular surface texture thereto. An example is a film containing a layer of a copolyether ester with hardness 40 Shore D and a layer of a copolyether ester with hardness 63 Shore D.

In another special embodiment of the process according to the invention, the decorated film comprises at least one layer consisting essentially of a thermoplastic elastomer containing polyether segments that is foamed; that is the layer has a porous structure, preferably a closed cell structure. The advantage hereof is that the soft-touch character of the decorated surface can be further improved and a resilient cushioning effect can be obtained. This is specifically of interest for appliances and hand-held equipment, and for automotive interior parts, like dashboard parts and pillar or other coverings. A porous film may be made via an extrusion process using a thermoplastic elastomer composition and a chemical or physical blowing agent.

The film thickness may vary within broad limits. Preferably, a film has a thickness greater than 0.01 mm, because otherwise the film is difficult to handle and the risk of the film tearing or wrinkling as the mould is filled is large. The film is preferably thinner than 2, more preferably thinner than 1 mm, depending on its hardness and flexibility, for easier shaping into a 3-D moulded article and better adhesion to the surface of the article. Consequently, the film preferably has a thickness of 0.01-1 mm, more preferably 0.05-0.75 mm and most preferably 0.1-0.5 mm. For enhancing soft-touch and cushioning effects, a foamed film with thickness between 0.5 and 2.0 mm, preferably between 1.0 and 1.5 mm is preferred.

Prior to being introduced in the opened mould, the decorated film may be made to a suitable size by for example cutting or stamping at room temperature or at reduced temperature, for example cryogenic cutting. Such cutting or stamping may be effected with the aid of knives but also with for example. a water jet or laser beam. Also, it is possible to make the film to a suitable size during or just before the injection-moulding step (b). In the latter case, the film may be fed for example continuously from a roll to the mould and injection-moulding machine.

The plastic composition may contain polymers of different chemical composition and properties. Preferably, the plastic composition is based on a polymer that is compatible or miscible with the copolymer in the film with which it is contacted as the mould is filled. A composition based on a polymer is understood to mean that said polymer is the main component of the composition, that is the polymer forms a continuous phase of the composition. The advantage hereof is that good adhesion is obtained between the plastic composition and the film. If a film containing copolyether amide is used, the plastic composition is preferably based on for example a polyamide. A copolyether urethane film has the advantage that the film shows good adhesion to various plastics.

In the case of a copolyether ester-containing film, suitable plastic compositions may be based on a thermoplastic polyester and/or a polycarbonate. Examples of suitable polyesters include polyalkylene terephthalates, like polyethylene terephthalate (PET) and polybutylene terephthalate (PBT) and blends thereof, compositions based on PBT being preferred. Examples of polycarbonate plastic compositions include compositions based on bisphenol-A polycarbonate (PC), and copolymers and blends thereof. Preferred compositions are for example blends of PC and PET (PC/PET), PC and PBT (PC/PBT) or PC and acrylonitrile/butadiene/styrene copolymers (PC/ABS). The advantage of such plastic compositions is that moulded articles are obtained with close dimensional tolerances and with very good dimensional stability across a large temperature range, which articles may be used as housings for a variety of appliances.

A particular embodiment of the invention is a process employing a combination of a copolyether ester-containing film and a plastic composition based on a PC/ABS blend.

In another embodiment of the process according to the invention, the mould is filled in step (b) with a foamed plastic composition. The advantage hereof is a moulded article with low density. If the plastic composition used has a low modulus, a soft-feel moulded article is obtained that yet has a closed and decorated surface of good quality. In these cases, the film used is preferably non-porous. An example of such embodiment is a process wherein a mould is filled with a polyurethane foam against a copolyether ester film.

In another suitable embodiment, the film is laser-markable, for example due to the film containing at least one radiation-sensitive colorant that changes colour under the influence of radiation from for example a laser. 'Colour change' includes a change of a chromatic colour into another colour, the obtaining of a colour from an uncoloured state, or the partial or complete loss of colour. The laser-markable film may also contain another additive for improving laser-markability. The advantage of these measures is that additional indicia or decorations may later be applied to a mass-produced moulded article, which indicia may be altered in a relatively simple manner, if desired even for every other article being produced. This makes it possible to impart a personal character or a unique code to a product, e.g. to personal appliances, such as a cellular telephone or a personal digital assistant.

If the film contains at least two, preferably at least three radiation-sensitive colorants, the choice of the type of laser radiation, for example, allows markings to be provided in different colours, even a multi-coloured image such as a photo of the user.

In another embodiment the film is printed with a laser-markable ink, optionally laser-markable in multi-colour.

It is also possible to mark by laser radiation not the transparent or translucent film but the plastic composition underneath the film and to apply an image thereon by means of irradiation with laser light through the film.

The invention also relates to a decorated plastic moulded article so obtainable. In particular, the invention relates to a decorated moulded article with a decorated surface that also has soft-touch and/or non-slip properties.

The invention also relates to a plastic moulded article with a decorated surface to which other markings may be applied through laser irradiation. The advantage hereof is that, although the film is deformed 3-dimensionally, the moulded article may yet be provided with an image in any desired position and with high accuracy. Therefore, the invention also relates to such a marked and decorated plastic moulded article.

The invention also relates to an end-use product with a significant part of its surface consisting of at least a plastic moulded article according to the invention. The advantage hereof is that the end-use product is provided with decorative or informative images that are little prone to for example wear. Another advantage is that the end-use product may be laser-marked with unique, personal images. Yet another advantage is that the end-use product may also have soft-touch and/or non-slip properties, which especially for small electrical or electronic items help prevent the item from slipping the hands or clothes.

The invention is illustrated with reference to the following examples and comparative experiments.

### Films

With the aid of a general-purpose extruder provided with a 45 mm screw and flat-film peripheral equipment, films of thickness approximately 0.05 mm, 0.1 mm and 0.15 mm were made from the following commercially available materials (DSM Engineering Plastics, NL) :
Arnitel® EM400 Copolyether ester composition based on PBT hard segments and soft segments derived from a poly(tetramethylene oxide)glycol, with hardness approximately 40 Shore D;
Arnitel® EM550 Copolyether ester of hardness approximately 55 Shore D;
Arnitel® EM740 Copolyether ester of hardness approximately 74 Shore D.

A foamed film of about 1.5 mm thickness was made by extruding a composition containing EM400 post-condensed to a high viscosity, 0.5 mass% of Hydrocerol CLM70 as a chemical blowing agent and carbon black as colorant. Temperature settings of the cylinder were 160-230-235-220°C, of the die 215°C, three rollers were set at 50°C. The density of this black film, which showed a slightly textured surface, was about 0.85 g/cm³ versus 1.12 g/cm³ for non-foamed material.

### Example I

A film made of Arnitel® EM400 of thickness 0,05 mm, cut to approximately 100 * 200 mm, was introduced in an open mould, whereupon the film was clamped between the two mould halves by closing the mould. The mould contained a single mould cavity for a moulded article constituting the front of the housing of a cellular telephone, which moulded article exhibits 17 openings for operating keys and an opening for a small display. The mould was held at a temperature of 50°C by means of a water thermostat and had been mounted in an Engel injection moulding machine with a general-purpose screw of diameter 22 mm.

After closing the mould, the mould cavity was filled with a molten PC/ABS plastic composition, type Stapron® CM 404 (DSM Engineering Plastics, NL), which had been pre-dried in an air circulation oven for 6 hours at 90°C. The temperature settings of the injection moulding machine were 240-250-260-265°C from feed hopper to nozzle; the plasticizing time was approximately 4.5 sec., the injection time was approximately 0.7 sec., the cooling time was approximately 15 sec and the cycle time was approximately 26 sec. The injected quantity of plastic composition was approximately 13 grams. Such settings are consistent with the recommended standard processing conditions for this material.

On removing the moulded article from the mould, the film was found to be present all over the surface of the moulded article, without visible tears, folds or other defects. All openings in the moulded article were completely spanned by the film. The moulded article had a specific "soft-touch" feel.

### Examples II-III

Analogously to Example I, moulded articles were made with films of thickness 0.1 and 0.15 mm. All moulded articles had the appearance described earlier. It was practically impossible to pull the film from the surface by hand, adhesion was such that the film began to tear.

### Examples IV-VI

Analogously to Example I, moulded articles were made with Arnitel® EM550 films of different thickness. The moulded articles exhibited the properties described earlier.

### Examples VII-IX

Analogously to Example I, moulded articles were made with Arnitel® EM740 films of different thickness. The film was uniformly distributed over the whole surface of the moulded article and showed good adhesion. With the almost smooth surface, the obtained moulded articles did not have a soft-touch character.

### Example X

A light-grey film consisting of an Arnitel® EM400 composition, which also contained a mixture of a yellow, a cyan and a magenta colorant, which colorants fade on being irradiated with laser light, was used analogously to Example I for making a moulded article whose surface consisted of this film. The moulded article was subsequently irradiated with laser light of wavelength 532 nm originating from a diode-pumped Nd: YAG laser. Clearly legible, green markings and texts appeared on the surface.

### Example XI

A 0.15 mm film consisting of an Arnitel® EM550 composition was decorated with a combination of lettering and illustrations using different colours and printing techniques, which printing is normally applied in production of a label for a container. Analogous to example I articles were moulded, after placing the film in the opened mould, with the printed film surface on the outside of the part. The decorated film fully covered and adhered to one surface of the part. Printed words were still legible and illustrations clearly recognizable, also at those parts where the film was stretched during moulding.

### Example XII

A piece of the foamed film indicated above was cut to approximately fit the mould for a tray with dimensions of about 20*10*4 cm (length, width, depth). The film was placed in the opened mould and Stapron CM 404 was injected using standard processing conditions. The moulded tray was nicely covered on its outer surface by the foamed film, showing excellent adhesion and only some minor folding at the comers. The surface texture and an engraving of the original tray were well visible in the film. The covered part of the tray had a pleasant non-slippery touch, and showed a resilient cushioning effect upon pushing with a fingertip.

## Claims

1. Process for making a plastic moulded article with a decorated surface, comprising the steps of
(a) introducing a decorated film in a mould; and
(b) filling of the mould with a plastic composition by means of injection moulding;
**characterized in that** the decorated film comprises at least one layer consisting essentially of a thermoplastic elastomer containing polyether segments.

2. Process according to Claim 1, wherein the thermoplastic elastomer has a hardness of 30-75 Shore D.

3. Process according to either of Claims 1-2, wherein the thermoplastic elastomer is a copolyether ester.

4. Process according to Claim 3, wherein the copolyether ester contains hard segments that are essentially based on polybutylene terephthalate.

5. Process according to any one of Claims 1-4, wherein the thermoplastic elastomer contains soft segments derived from poly(tetramethylene oxide)glycol or ethylene oxide-terminated poly(propylene oxide)glycol.

6. Process according to any one of Claims 1-5, wherein the film is decorated by means of sublimation printing.

7. Process according to any one of Claims 1-6, wherein the film is transparent or translucent.

8. Process according to any one of Claims 1-7, wherein the at least one layer is a foamed film with a closed cell structure.

9. Process according to any one of Claims 1-8, wherein the film consists of a single layer consisting essentially of a thermoplastic elastomer containing polyether segments.

10. Process according to any one of Claims 1-8, wherein the film comprises at least two layers, of which at least an outer layer consists essentially of a thermoplastic elastomer containing polyether segments and which has been provided with decorations.

11. Process according to Claim 10, wherein the at least two layers both consist essentially of a thermoplastic elastomer containing polyether segments, but of different hardness.

12. Process according to any one of Claims 1-11, wherein a plastic composition is used that is based on a polymer that is compatible or miscible with the thermoplastic elastomer containing polyether segments.

13. Process according to Claim 12, wherein the plastic composition is based on a thermoplastic polyester and/or a polycarbonate, and the thermoplastic elastomer is a copolyether ester.

14. Process according to Claim 13, wherein the plastic composition is a PC/ABS composition.

15. Process according to any one of Claims 1-14, wherein the film is laser-markable.

16. Process according to any one of Claims 1-14, wherein the plastic composition is laser-markable.

17. Plastic moulded article with a decorated surface, the decorated surface consisting of a decorated film, the film comprising at least one layer consisting essentially of a copolyether ester.

18. Plastic moulded article with a decorated surface, the decorated surface consisting of a decorated film, the film comprising at least two layers, of which at least an outer layer consists essentially of a thermoplastic elastomer containing polyether segments.

19. Plastic moulded article according to claim 18, wherein the thermoplastic elastomer is a copolyether ester.

20. Plastic moulded article according to any of claims 17 to 19, the article being laser markable.

21. Plastic moulded article with a decorated surface according to Claim 20 provided with laser markings.

22. End-use product with a significant part of its surface consisting of at least a plastic moulded article according to any one of Claims 17-21.

## Patentansprüche

1. Verfahren zur Herstellung eines Kunststoffformgegenstandes mit einer dekorierten Oberfläche, umfassend die Schritte
(a) Einführen einer dekorierten Folie in eine Form und
(b) Füllen der Form mit einer Kunststoffzusammensetzung mittels Spritzgußformen,
**dadurch gekennzeichnet, daß** die dekorierte Folie mindestens eine Schicht, bestehend aus im wesentlichen einem thermoplastischen Elastomer, welches Polyethersegmente enthält, umfaßt.

2. Verfahren nach Anspruch 1, wobei das thermoplastische Elastomer eine Härte von 30 bis 75 Shore D aufweist.

3. Verfahren nach Anspruch 1 oder 2, wobei das thermoplastische Elastomer ein Copolyetherester ist.

4. Verfahren nach Anspruch 3, wobei der Copolyetherester harte Segmente enthält, die im wesentlichen auf Polybutylenterephthalat basieren.

5. Verfahren nach einem der Ansprüche 1 bis 4, wobei das thermoplastische Elastomer weiche Segmente, abgeleitet von Poly(tetramethylenoxid)glykol oder Ethylenoxid-terminiertem Poly(propylenoxid)glykol, enthält.

6. Verfahren nach einem der Ansprüche 1 bis 5, wobei die Folie mittels Sublimationsdruck dekoriert ist.

7. Verfahren nach einem der Ansprüche 1 bis 6, wobei die Folie transparent oder transluzent ist.

8. Verfahren nach einem der Ansprüche 1 bis 7, wobei die mindestens eine Schicht eine geschäumte Folie mit einer geschlossenzelligen Struktur ist.

9. Verfahren nach einem der Ansprüche 1 bis 8, wobei die Folie aus einer Einzelschicht besteht, die im wesentlichen aus einem thermoplastischen Elastomer besteht, welches Polyethersegmente enthält.

10. Verfahren nach einem der Ansprüche 1 bis 8, wobei die Folie mindestens zwei Schichten umfaßt, wovon mindestens eine äußere Schicht im wesentlichen aus einem thermoplastischen Elastomer besteht, das Polyethersegmente enthält, und welche mit Dekorationen versehen worden ist.

11. Verfahren nach Anspruch 10, wobei die mindestens zwei Schichten beide im wesentlichen aus einem thermoplastischen Elastomer, das Polyestersegmente enthält, aber mit verschiedener Härte bestehen.

12. Verfahren nach einem der Ansprüche 1 bis 11, wobei eine Kunststoffzusammensetzung verwendet wird, die auf einem Polymer basiert, das mit dem thermoplastischen Elastomer, das Polyethersegmente enthält, kompatibel oder mischbar ist.

13. Verfahren nach Anspruch 12, wobei die Kunststoffzusammensetzung auf einem thermoplastischen Polyester und/oder einem Polycarbonat basiert, und das thermoplastische Elastomer ein Copolyetherester ist.

14. Verfahren nach Anspruch 13, wobei die Kunststoffzusammensetzung eine PC/ABS-Zusammensetzung ist.

15. Verfahren nach einem der Ansprüche 1 bis 10, wobei die Folie Laser-markierbar ist.

16. Verfahren nach einem der Ansprüche 1 bis 14, wobei die Kunststoffzusammensetzung Laser-markierbar ist.

17. Kunststoffformgegenstand mit einer dekorierten Oberfläche, wobei die dekorierte Oberfläche aus einer dekorierten Folie besteht, wobei die Folie mindestens eine Schicht umfaßt, die im wesentlichen aus einem Copolyetherester besteht.

18. Kunststoffformgegenstand mit einer dekorierten Oberfläche, wobei die dekorierte Oberfläche aus einer dekorierten Folie besteht, wobei die Folie mindestens zwei Schichten umfaßt, wovon mindestens eine äußere Schicht im wesentlichen aus einem thermoplastischen Elastomer besteht, das Polyethersegmente enthält.

19. Kunststoffformgegenstand gemäß Anspruch 18, wobei das thermoplastische Elastomer ein Copolyetherester ist.

20. Kunststoffformgegenstand gemäß einem der Ansprüche 17 bis 19, wobei der Gegenstand Laser-markierbar ist.

21. Kunststoffformgegenstand mit einer dekorierten Oberfläche gemäß Anspruch 20, versehen mit Lasermarkierungen.

22. Endverbrauch-Gegenstand, wobei ein signifikanter Teil von dessen Oberfläche aus mindestens einem Kunststoffgegenstand gemäß einem der Ansprüche 17 bis 21 besteht.

## Revendications

1. Procédé de fabrication d'un article moulé en plastique comportant une surface décorée, comprenant les étapes consistant à
(a) introduire un film décoré dans un moule ; et
(b) remplir le moule avec une composition plastique au moyen de moulage par injection ;
**caractérisé en ce que** le film décoré comprend au moins une couche constituée essentiellement d'un élastomère thermoplastique contenant des segments polyéther.

2. Procédé selon la revendication 1, dans lequel l'élastomère thermoplastique présente une dureté Shore D de 30-75.

3. Procédé selon l'une ou l'autre des revendications 1 et 2, dans lequel l'élastomère thermoplastique est un copolyéther ester.

4. Procédé selon la revendication 3, dans lequel le copolyéther ester contient des segments durs qui sont essentiellement à base de polytéréphtalate de butylène.

5. Procédé selon l'une quelconque des revendications 1 à 4, dans lequel l'élastomère thermoplastique contient des segments souples dérivés de poly(oxyde de tétraméthylène)glycol ou de poly(oxyde de propylène)glycol à terminaison oxyde d'éthylène.

6. Procédé selon l'une quelconque des revendications 1 à 5, dans lequel le film est décoré au moyen d'impression par sublimation.

7. Procédé selon l'une quelconque des revendications 1 à 6, dans lequel le film est transparent ou translucide.

8. Procédé selon l'une quelconque des revendications 1 à 7, dans lequel ladite couche est un film expansé avec une structure cellulaire fermée.

9. Procédé selon l'une quelconque des revendications 1 à 8, dans lequel le film est constitué d'une couche unique constituée essentiellement d'un élastomère thermoplastique contenant des segments polyéther.

10. Procédé selon l'une quelconque des revendications 1 à 8, dans lequel le film comprend au moins deux couches, dont au moins une couche externe est constituée essentiellement d'un élastomère thermoplastique contenant des segments polyéther et qui est munie de décorations.

11. Procédé selon la revendication 10, dans lequel lesdites couches sont constituées toutes deux essentiellement d'un élastomère thermo-plastique contenant des segments polyéther, mais d'une dureté différente.

12. Procédé selon l'une quelconque des revendications 1 à 11, dans lequel on utilise une composition plastique qui est à base d'un polymère qui est compatible ou miscible avec l'élastomère thermoplastique contenant des segments polyéther.

13. Procédé selon la revendication 12, dans lequel la composition plastique est à base d'un polyester thermoplastique et/ou d'un polycarbonate, et l'élastomère thermoplastique est un copolyéther ester.

14. Procédé selon la revendication 13, dans lequel la composition plastique est une composition PC/ABS.

15. Procédé selon l'une quelconque des revendications 1 à 14, dans lequel le film est marquable au laser.

16. Procédé selon l'une quelconque des revendications 1 à 14, dans lequel la composition plastique est marquable au laser,

17. Article moulé en plastique comportant une surface décorée, la surface décorée étant constituée d'un film décoré, le film comprenant au moins une couche constituée essentiellement d'un copolyéther ester.

18. Article moulé en plastique comportant une surface décorée, la surface décorée étant constituée d'un film décoré, le film comprenant au moins deux couches, dont au moins une couche externe est constituée essentiellement d'un élastomère thermoplastique contenant des segments polyéther.

19. Article moulé en plastique selon la revendication 18, dans lequel l'élastomère thermoplastique est un copolyéther ester.

20. Article moulé en plastique selon l'une quelconque des revendications 17 à 19, l'article étant susceptible d'être marqué au laser.

21. Article moulé en plastique comportant une surface décorée selon la revendication 20 munie de marquages au laser.

22. Produit final comportant une partie significative de sa surface constituée d'au moins un article moulé en plastique selon l'une quelconque des revendications 17 à 21.
